# EUROPÄISCHE PATENTSCHRIFT

(11) **EP 0 612 573 B1**
(45) Veröffentlichungstag und Bekanntmachung des Hinweises auf die Patenterteilung: **04.03.1998**
(21) Anmeldenummer: 94810013.6
(22) Anmeldetag: 11.01.1994
(51) Int. Cl.: B22D 17/20, B22D 17/22, B29C 45/34

(54) **Ventileinrichtung zum Entlüften von Druckgiessformen**
Valve mechanism for venting diecasting moulds
Valve pour désaérer des moules de coulée sous pression

(30) Priorität: 02.02.1993 DE 4302798
(43) Veröffentlichungstag der Anmeldung: 31.08.1994
(73) Patentinhaber: FONDAREX S.A., CH-1816 Chailly sur Montreux (CH)
(72) Erfinder: Wyser, Johann,, CH-2514 Ligerz (CH)
(74) Vertreter: Rottmann, Maximilian R.

(56) Entgegenhaltungen:
- AT-B- 325 226
- CH-A- 633 208
- DE-A- 2 429 920
- DE-A- 3 505 554
- DE-A- 3 730 837
- DE-B- 2 249 417

## Beschreibung

Die Erfindung betrifft eine Ventileinrichtung zum Entlüften von Druckgiessformen, mit einem Entlüftungskanal, einem im Entlüftungskanal angeordneten Entlüftungsventil und einer Betätigungsvorrichtung zum Schliessen des Entlüftungsventils, wobei die Betätigungsvorrichtung einen Kraftaufnehmer aufweist, welcher durch aus dem Formhohlraum in den Entlüftungskanal vordringendes Giessmaterial beaufschlagbar ist und mit dem beweglichen Verschlussteil des Entlüftungsventils in mechanischer Wirkverbindung steht.

Ventileinrichtungen dieser Art sind normalerweise an einem von zwei zusammenstossenden Formteilen der Druckgiessform montiert, und zwar am äusseren Rand der betreffenden Stossfläche, und haben eine mit der Stossfläche fluchtende Frontfläche, welche bei geschlossener Giessform an der Stossfläche des anderen Formteils dicht anliegt. Der Entlüftungskanal der Ventileinrichtung ist zu deren Frontfläche hin offen und bildet die Fortsetzung des am betreffenden Formteil vorgesehenen, aus dem Formhohlraum führenden und zur Stossfläche hin ebenfalls offenen Entlüftungskanals der Druckgiessform. Das nach aussen führende Ende des Entlüftungskanals der Ventileinrichtung kann entweder offen bleiben oder mit einer Vakuumpumpe verbunden sein, welche die im Formhohlraum enthaltene und durch das in die Druckgiessform einströmende Giessmaterial verdrängte Luft absaugt.

Ein Entlüftungsventil, welches nach dem Entlüftungsvorgang geschlossen wird, soll verhindern, dass flüssiges Giessmaterial nach aussen oder in die Vakuumpumpe gelangt. Ausgelöst wird der Schliessvorgang des Entlüftungsventils durch das in den Entlüftungskanal der Ventileinrichtung vordringende Giessmaterial. Zu diesem Zweck wird nach bewährter Praxis ein in der Ventileinrichtung aufgebauter Staudruck des vordringenden Giessmaterials mechanisch in eine die Schliessung des Entlüftungsventils bewirkende Kraft umgesetzt. Im Hinblick darauf, dass das Giessmaterial unter hohem Druck in die Druckgiessform gestossen wird und nach dem Auffüllen des Formhohlraums mit entsprechend hoher Geschwindigkeit in den Entlüftungskanal und auf das Entlüftungsventil zuströmt, soll diese Kraftumsetzung mit minimaler Zeitverzögerung erfolgen, um zu erreichen, dass der Schliessvorgang beendet ist, bevor das Giessmaterial bis zum Entlüftungsventil vorgedrungen ist. Vor allen Dingen muss vermieden werden, dass Giessmaterial in den Durchlassbereich des Entlüftungsventils eindringen kann, weil dieses sonst seine Funktionstüchtigkeit einbüsst.

Bisherige Erfahrungen mit derartigen Ventileinrichtungen haben gezeigt, dass es durch geeignete Ausbildung der Mittel zur Kraftumsetzung gelingt, äusserst kurze Verzögerungszeiten (weniger als 1 ms) zu erreichen, so dass die erforderliche Schnelligkeit des Ventilschlusses und eine einwandfreie Funktion des Entlüftungsventils gewährleistet sind.

Aus der CH-PS 633 208 ist beispielsweise eine Ventileinrichtung der eingangs beschriebenen Art bekannt, welche in der vorgenannten Weise eingesetzt wird und die angegebenen Forderungen erfüllt. Diese Ventileinrichtung enthält ein Kolbenventil, dessen Längsachse senkrecht zur Frontseite der Ventileinrichtung verläuft und das einen an den Entlüftungskanal angeschlossenen Ventilzylinder und einen in diesem beweglichen Ventilkolben aufweist. Der Ventilkolben ist mit einem Kolbenkopf versehen, der bei geöffnetem Entlüftungsventil an der Frontseite der Ventileinrichtung in den Entlüftungskanal ragt und zum Verschliessen des Entlüftungsventils in den Ventilzylinder eintaucht.

Die Betätigungsvorrichtung besitzt als Kraftaufnehmer eine Zylinderanordnung mit einen Arbeitszylinder, welcher an einen in der Strömungsrichtung vor dem Kolbenventil liegenden Abschnitt des Entlüftungskanals angeschlossen ist, und mit einem vom anströmenden Giessmaterial beaufschlagbaren Arbeitskolben. Der Arbeitszylinder der Betätigungsvorrichtung und der Ventilzylinder des Kolbenventils sind achsparallel zueinander angeordnet, und der Arbeitskolben ist mit dem Ventilkolben in der Weise verbunden, dass der vom Giessmaterial beaufschlagte und in Bewegung gesetzte Arbeitskolben eine Bewegung des Ventilkolbens in Schliessrichtung bewirkt.

Bei der Ventileinrichtung nach der CH-PS 633 208 ist der Arbeitskolben der Betätigungsvorrichtung mit dem Ventilkolben des Entlüftungsventils entweder unmittelbar oder mittels eines Mitnehmers formschlüssig verbunden, wobei sich dieser Mitnehmer auf einer achsparallelen Bahn mit diesen Kolben bewegt. Gemäss einer Variante ist vorgesehen, dass der Arbeitskolben lediglich kraftschlüssig auf den Mitnehmer einwirkt. In jedem Fall ist aber der Weg, den der Arbeitskolben bei seiner Betätigung zurücklegt, gleich gross wie der Schliessweg des Ventilkolbens, welcher z.B. 5 bis 10 mm betragen kann. Dieser Umstand hat sich aus verschiedenen Gründen als nachteilig erwiesen.

Unter der Wucht des vordringenden Giessmaterials erreicht die in Bewegung gesetzte Masse (Arbeitskolben, Mitnehmer, Ventilkolben) am Ende des zurückgelegten Arbeitsweges eine verhältnismässig hohe kinetische Energie, welche durch Abbremsen der bewegten Masse wieder abgebaut werden muss. Ein harter Endanschlag der bewegten Masse könnte unter Umständen zu einer Zerstörung der Ventileinrichtung führen. Es sind deshalb geeignete Mittel zur Stossdämpfung erforderlich, welche jedoch ziemlich aufwendig sind, besonders dann, wenn nur ein kurzer Bremsweg bzw. eine kurze Bremszeit zur Verfügung steht. In diesem Zusammenhang ist zu beachten, dass der Tauchkolben des Entlüftungsventils eine definierte Eintauchtiefe hat. Wird diese Eintauchtiefe durch den Bremsvorgang wenn auch nur vorübergehend verlängert, so kann in den Zylinderraum eindringendes Giessmaterial die Funktionssicherheit des Entlüftungsventils gefährden.

Andererseits wird beim Betätigen des Arbeitskolbens ein Teil der Zylinderfläche des Arbeitszylinders freigelegt und so dem Zutritt des Giessmaterials ausgesetzt. Dieser Teil der Zylinderfläche erreicht eine achsiale Länge, welche ebenso gross ist wie der Arbeitsweg des Arbeitskolbens. Infolgedessen bildet das in die Zylinderbohrung eindringende Giessmaterial nach seinem Erstarren einen Zapfen, der sich an der Zylinderfläche verklemmen kann und sich wegen seiner Länge nur mit grossem Kraftaufwand wieder aus der Zylinderbohrung entfernen lässt. Dadurch entstehen Schwierigkeiten beim Öffnen der Druckgiessform, und beim Ausstossen dieses Zapfens kann die Zylinderfläche beschädigt werden; zumindest ist mit einem vorzeitigen Verschleiss derselben zu rechnen, der durch eine allfällige Aggressivität des Giessmaterials noch gefördert wird.

Der Erfindung liegt daher die Aufgabe zugrunde, die Ventileinrichtung der eingangs genannten Art durch Massnahmen zu verbessern, welche unter Vermeidung der erwähnten Nachteile die vom Kraftaufnehmer aufzunehmende kinetische Energie auf ein Mass reduzieren, welches für eine Schliessung des Entlüftungsventils ausreicht, um dadurch eine günstigere Arbeitsweise der Betätigungsvorrichtung zu ermöglichen.

Diese Aufgabe wird erfindungsgemäss durch die im Patentanspruch 1 angegebenen Massnahmen gelöst.

Bei der erfindungsgemässen Lösung kann die kinetische Energie des Kraftaufnehmers durch den verkürzten Arbeitshub desselben in tragbaren Grenzen gehalten und ohne besondere Stossdämpfungsmassnahmen an einem festen Anschlag gefahrlos aufgefangen werden. Der durch den Kraftimpuls in Bewegung gesetzte Verschlussteil des Entlüftungsventils bewegt sich im freien Lauf in Schliessrichtung weiter. Durch diesen Freilauf, d.h. durch die nach dem Kraftimpuls erfolgte Aufhebung des Kraftschlusses zwischen dem kurzhubigen Stossorgan und der von diesem in Bewegung gesetzten Masse wird ausserdem erreicht, dass der grösste Teil des Arbeitsweges dieser Restmasse als Bremsweg für die Umsetzung der kinetischen Energie derselben zur Verfügung steht. Die dazu benötigten Bremsmittel können dementsprechend einfacher und weniger aufwendig sein als ein Stossdämpfer für die gesamte, erst am Ende des durch den Verschlussweg des Entlüftungsventils bestimmten Arbeitsweges abzubremsende Masse. Die Schliesszeit des Entlüftungsventils wird durch den Freilauf des Verschlussteils nicht verlängert und liegt in der Grössenordnung von 1 msec.

Für den Fall, dass das vom Giessmaterial beaufschlagte Stossorgan gemäss einer bevorzugten Ausführungsform der Erfindung als Freikolben ausgebildet ist, welcher in einem in den Entlüftungskanal mündenden Arbeitszylinder bewegbar ist, lässt sich ferner wegen des kurzen Arbeitshubes des Freikolbens der für das vordringende Giessmaterial zugängliche Teil der Zylinderfläche des Arbeitszylinders so kurz halten, dass eine Zapfenbildung am erstarrenden Giessmaterial und damit die sich daraus ergebenden Nachteile weitgehend vermieden werden.

Demgegenüber besteht aufgrund des begrenzten Arbeitshubes auch die Möglichkeit, den Kraftaufnehmer als Membran auszubilden, welche eine Mündung des Entlüftungskanals abschliesst. Damit entfallen die mit einen vom Giessmaterial beaufschlagbaren Kolben verbundenen Nachteile gänzlich. Es ist zwar aus der AT-PS 325 226 bekannt, zur Auslösung der Schliessbewegung des Entlüftungsventils eine vom Giessmaterial beaufschlagte Membran vorzusehen, welche beispielsweise zum Öffnen eines Steuerventils, zum Schliessen eines elektrischen Kontaktes oder zur Betätigung eines Hebelsystems dient. Bei allen diesen Ausführungen entspricht aber der Arbeitshub der Membran dem Arbeitsweg des von der Membran beeinflussten Organs. Von einem Freilauf des beweglichen Verschlussteils des Entlüftungsventils ist jedenfalls nicht die Rede.

Wie erwähnt, ist es aus betrieblichen Gründen erforderlich, den Kraftaufnehmer der Betätigungsvorrichtung und das Entlüftungsventil an örtlich getrennten Stellen des Entlüftungskanals der Ventileinrichtung anzuordnen. Aus diesem Grund ist eine unmittelbare mechanische Einwirkung des Kraftaufnehmers auf den beweglichen Verschlussteil des Entlüftungsventils in der Regel nicht möglich. Vielmehr ist es im allgemeinen zweckmässig, die Betätigungsvorrichtung mit einem Kraftübertragungsorgan für die Übertragung des Stossimpulses vom Kraftaufnehmer auf den beweglichen Verschlussteil des Entlüftungsventils auszurüsten, welches den aus konstruktiven Gründen vorhandenen gegenseitigen Abstand dieser Teile überbrückt.

Im Falle eines Freikolbens als Kraftaufnehmer könnte das Kraftübertragungsorgan z.B. aus einem am Freikolben vorgesehenen Ansatz mit radialer Ausdehnung bestehen, welcher mit dem beweglichen Verschlussteil des Entlüftungsventils zusammenarbeitet. Eine solche Lösung ist zwar sehr einfach, hat aber den Nachteil, dass der achsial geführte Freikolben bei der Kraftübertragung durch die zu bewegende Masse des Verschlussteils einseitig belastet wird. Durch die dabei am Freikolben auftretenden Querkräfte können übermässig hohe Reibungsverluste entstehen, welche eine vermehrte Abnützung der Kolbenführung bewirken und unter Umständen einen vorzeitigen Ausfall der Betätigungsvorrichtung zur Folge haben können.

Als vorteilhafter hat sich eine Lösung erwiesen, bei der das Kraftübertragungsorgan mit dem Kraftaufnehmer kraftschlüssig und mit dem beweglichen Verschlussteil des Entlüftungsventils formschlüssig verbunden ist.

In Anlehnung an das konstruktive Konzept bekannter Ventileinrichtungen zum Entlüften von Druckgiessformen ist das Entlüftungsventil vorzugsweise als Kolbenventil mit Tauchkolben ausgebildet und das Stossorgan wie bekannte Kraftaufnehmer achsparallel zum Kolbenventil angeordnet. In diesem Fall kann das Kraftübertragungsorgan eine achsial bewegliche und koachsial zum Stossorgan angeordnete Mitnehmerscheibe aufweisen, die an ihrer Peripherie mit dem Tauchkolben des Entlüftungsventils formschlüssig verbunden ist und in der Ruhelage der Betätigungsvorrichtung unter Federkraft an einer Stossfläche des Stossorgans anliegt.

Um bei geschlossenem Entlüftungsventil dessen Verschlussteil in der Schliessstellung zu halten, würde der Druck der aus der Druckgiessform verdrängten Luft bzw. des nachströmenden Giessmaterials an sich ausreichen. Unter gewissen Umständen ist aber damit zu rechnen, dass der Verschlussteil beim Erreichen der Endstellung zurückprallt, so dass das Entlüftungsventil noch kurz vor dem Eintreffen des Giessmaterials wieder öffnet. Um diese Möglichkeit auszuschliessen, kann eine Lösung vorgesehen sein, bei welcher die Betätigungsvorrichtung ein Schliessorgan aufweist, welches mit dem beweglichen Verschlussteil des Entlüftungsventil in Wirkverbindung steht und dieses in der durch den Kraftimpuls des Stossorgans erreichten Schliessstellung hält.

Als Schliessorgan dient z.B. ein Arbeitszylinder mit pneumatisch oder hydraulisch betätigtem Arbeitskolben, wobei der Arbeitskolben mit dem beweglichen Verschlussteil, also z.B. mit dem Tauchkolben des Entlüftungsventils, durch ein starres Verbindungsglied formschlüssig verbunden ist. Vorzugsweise ist dabei der Arbeitszylinder des Schliessorgans achsparallel zum Stossorgan der Betätigungsvorrichtung angeordnet. In diesem Fall kann die Mitnehmerscheibe das starre Verbindungsglied bilden und sowohl mit dem beweglichen Verschlussteil des Entlüftungsventils als auch mit dem Arbeitskolben des Schliessorgans formschlüssig verbunden sein.

Besonders vorteilhaft erweist sich in diesem Zusammenhang eine Ausführungsform der Ventileinrichtung, welche dadurch gekennzeichnet ist, dass der bewegliche Verschlussteil des Entlüftungsventils und der Arbeitskolben des Schliessorgans an diametralen Stellen der Mitnehmerscheibe mit dieser verbunden sind. Durch die symmetrische Anordnung der mit der Mitnehmerscheibe verbundenen und von dieser zu bewegenden Massen lässt sich ein gewisser Massenausgleich erzielen, wodurch Querkräfte in den Längsführungen der bewegten Teile weitgehend vermieden werden. Am Stossorgan kommen keine Querkräfte zur Wirkung, da dieses mit dem Kraftübertragungsorgan lediglich durch Kraftschluss, also nicht formschlüssig verbunden ist.

In Bezug auf die Steuerung des Schliessorgans besteht eine bevorzugte Ausführungsform darin, dass die pneumatische oder hydraulische Beaufschlagung des Arbeitskolbens des Schliessorgans über ein vom beweglichen Verschlussteil des Entlüftungsventils betätigtes Steuerventil erfolgt. Auf diese Weise lässt sich erreichen, dass der Arbeitskolben des Schliessorgans bereits während der Schliessbewegung des Verschlussteils des Entlüftungsventils eine Kraft erzeugt, welche die Schliesskraft unterstützt und unabhängig ist von der jeweiligen Stosskraft des Stossorgans. Unter der Einwirkung dieser Zusatzkraft gelangt der im freien Lauf sich bewegende Verschlussteil auch dann in seine Schliessstellung, wenn der dem Verschlussteil durch das Stossorgan erteilte Kraftimpuls unter gewissen Umständen dazu nicht ausreicht. Dadurch ist die Ventileinrichtung weniger abhängig von den Druckverhältnissen in der Druckgiessform.

Vorzugsweise beträgt der Stosshub des Kraftaufnehmers weniger als 1 mm. Unter gewissen Umständen kann sogar ein Stosshub in der Grössenordnung von 0,1 mm gewählt werden, sofern die kinetische Energie des in die Ventileinrichtung vordringenden Giessmaterials genügend hoch ist. Dies kann bei grossen Druckgiessformen und hohem Giessdruck durchaus der Fall sein.

In der beigefügten Zeichnung sind Ausführungsbeispiele der erfindungsgemässen Ventileinrichtung dargestellt, und zwar zeigen:
- Fig. 1: einen Längsschnitt durch eine Ventileinrichtung gemäss einer ersten Ausführungsform, angebracht an der einen Formhälfte einer zweiteiligen, hier geöffneten Druckgiessform;
- Fig. 2: eine Vorderansicht eines ersten Teils des Gehäuseblocks der Ventileinrichtung nach Fig. 1;
- Fig. 3: einen Grundriss des Gehäuseblockteils nach Fig. 2;
- Fig. 4: eine Vorderansicht eines zweiten, die Frontseite der Ventileinrichtung bildenden Teils des Gehäuseblocks;
- Fig. 5: einen Längsschnitt der Ventileinrichtung gemäss Fig. 1, Druckgiessform geschlossen, Entlüftungsventil geöffnet;
- Fig. 6: einen Längsschnitt der Ventileinrichtung gemäss Fig. 5, Entlüftungsventil geschlossen;
- Fig. 7: einen Längsschnitt durch eine Ventileinrichtung gemäss einer zweiten Ausführungsform;
- Fig. 8: eine Einzelheit der Ausführungsform nach Fig. 7; und
- Fig. 9: Einzelheit der Ausführungsform nach Fig. 7, abgeändert gemäss einer dritten Ausführungsform der erfindungsgemässen Ventileinrichtung.

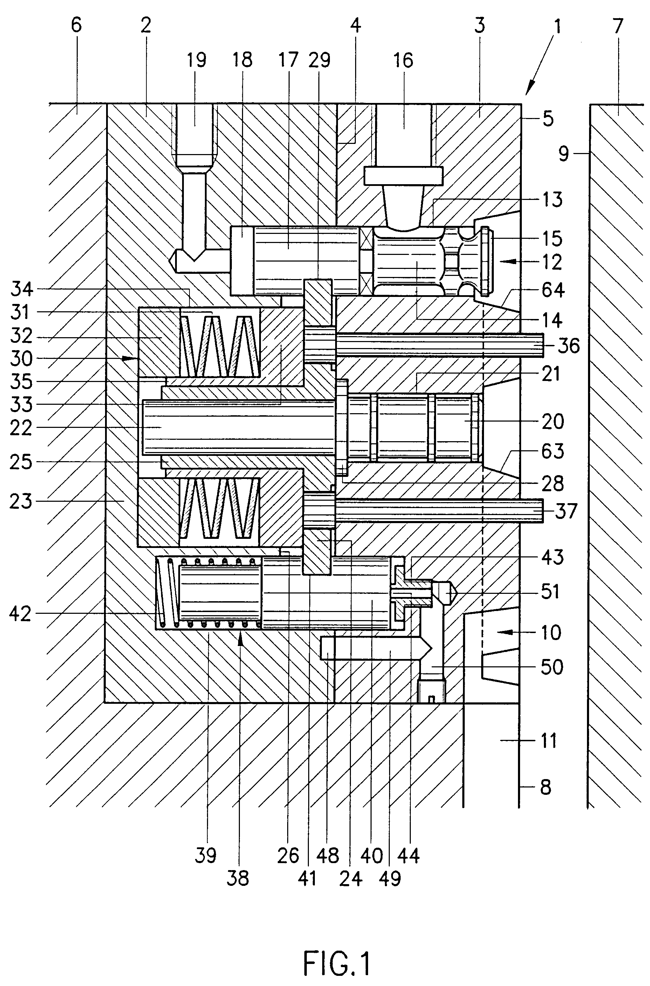

Die Ventileinrichtung 1 nach den Fig. 1 bis 6 ist in einem quaderförmigen, zweiteiligen Gehäuseblock 2, 3 untergebracht, welcher längs der Trennebene 4 in einen hinteren Gehäuseblockteil 2 und in einen vorderen, eine ebene Frontfläche 5 bildenden Gehäuseblockteil 3 unterteilt ist. Der Gehäuseblock 2, 3 ist nach bekannter Art am einen Formteil 6 von zwei zusammenstossenden, in der Zeichnung nur teilweise dargestellten Formteilen 6, 7 der Druckgiessform montiert, und zwar am äusseren Rand der betreffenden Stossfläche 8. Die Frontfläche 5 des Gehäuseblocks 2, 3 liegt mit der Stossfläche 8 des Formteils 6 in einer Flucht, so dass bei geschlossener Giessform die Frontfläche 5, wie die Stossfläche 8, an der Stossfläche 9 des anderen Formteils 7 dicht anliegt.

Die Befestigung des Gehäuseblocks 2, 3 am Formteil 6 und die gegenseitige Befestigung der Gehäuseblockteile 2 und 3 erfolgt mittels Schrauben, welche in der Zeichnung nicht dargestellt sind.

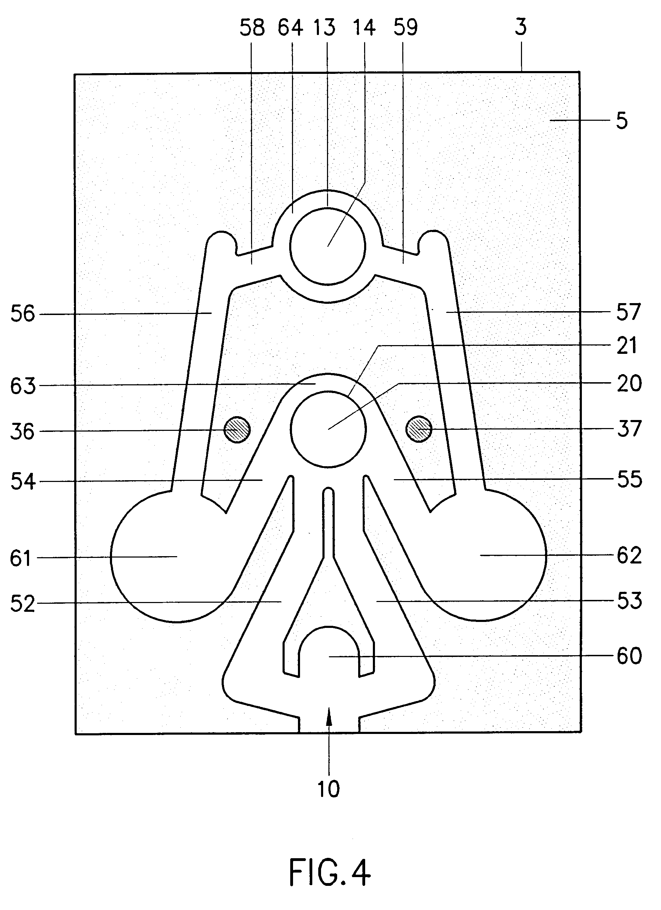

Am Gehäuseblockteil 3 ist in bekannter Weise ein generell mit 10 bezeichneter Entlüftungskanal vorgesehen, welcher zur Frontfläche 5 hin offen ist. Dieser, im Zusammenhang mit Fig. 4 ausführlicher beschriebene Entlüftungskanal 10 der Ventileinrichtung 1 bildet die Fortsetzung des am betreffenden Formteil 6 vorgesehenen, aus dem Formhohlraum führenden und zur Stossfläche 8 hin ebenfalls offenen Entlüftungskanals 11 der Druckgiessform.

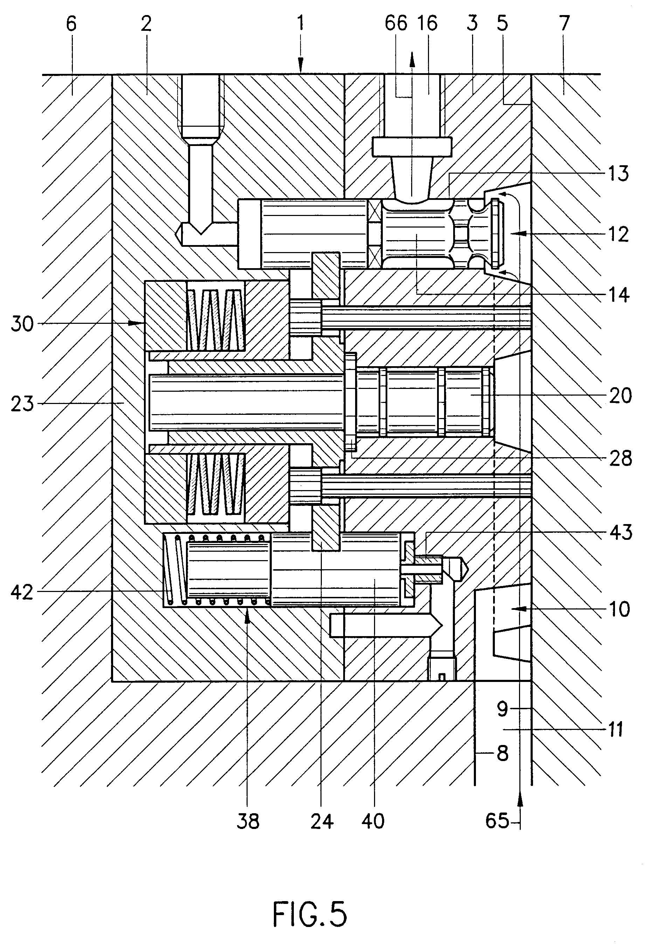

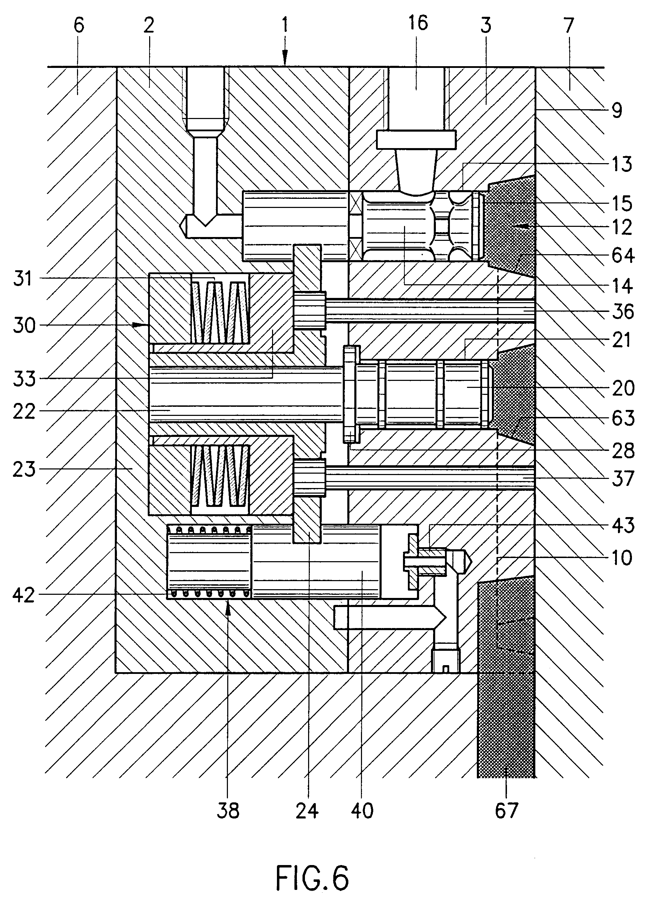

Das Entlüftungsventil 12 der Ventileinrichtung 1 ist ein Tauchkolbenventil nach der z.B. aus der CH-PS 633 208 bekannten Art, dessen Längsachse senkrecht zur Frontfläche 5 des Gehäuseblocks 2, 3 verläuft und das einen an den Entlüftungskanal 10 angeschlossenen Ventilzylinder 13 und einen in diesem beweglichen Ventilkolben 14 aufweist. Der Ventilkolben 14 ist mit einem Kolbenkopf 15 versehen, der bei geöffnetem Entlüftungsventil 12 (Fig. 1, 5) an der Frontseite der Ventileinrichtung 1 in den Entlüftungskanal 10 ragt und zum Verschliessen des Entlüftungsventils 12 in den Ventilzylinder 13 eintaucht (Fig. 6). An der Oberseite des Gehäuseblockteils 3 befindet sind der Auslasskanal 16 des Entlüftungsventils 12, an den die Saugleitung einer Vakuumpumpe (nicht dargestellt) anschliessbar ist. Der hinter einem rückwärtigen zylindrischen Fortsatz 17 des Ventilkolbens 14 befindliche Raum 18 des Ventilzylinders 13 ist innerhalb des Gehäuseblockteils 2 mit einem nach aussen führenden Kanal 19 verbunden, an den z.B. ein Sensor zur Überwachung der Ventilfunktion anschliessbar ist.

Zum Schliessen des Entlüftungsventils 12 ist eine mehrteilige Betätigungsvorrichtung vorgesehen. Hauptteil dieser Betätigungsvorrichtung ist ein durch aus dem Formhohlraum in den Entlüftungskanal 10 vordringendes Giessmaterial beaufschlagbarer Kraftaufnehmer, welcher mit dem Ventilkolben 14 des Entlüftungsventils 12 in mechanischer Wirkverbindung steht. Der Kraftaufnehmer ist erfindungsgemäss ein kurzhubiges Stossorgan, welches im vorliegenden Beispiel als Freikolben 20 ausgebildet ist, der in einem in den Entlüftungskanal 10 mündenden Arbeitszylinder 21 bewegbar ist. Dabei verläuft die Längsachse des Arbeitszylinders 21 parallel zu derjenigen des Entlüftungsventils 12. Eine rückwärtige zylindrische Verlängerung 22 des Freikolbens 20 reicht bis in die Nähe einer Rückwand 23 des Gehäuseblockteils 2. Diese Rückwand 23, an welcher der durch das vordringende Giessmaterial in Gang gesetzte Freikolben 20 mit seiner Verlängerung 22 zum Anschlag kommt, begrenzt den Arbeitshub des Freikolbens 20 auf ein Mass, das nur einen Bruchteil (z.B. einen Zehntel) des vom Ventilkolben 14 zurückzulegenden Schliessweges beträgt.

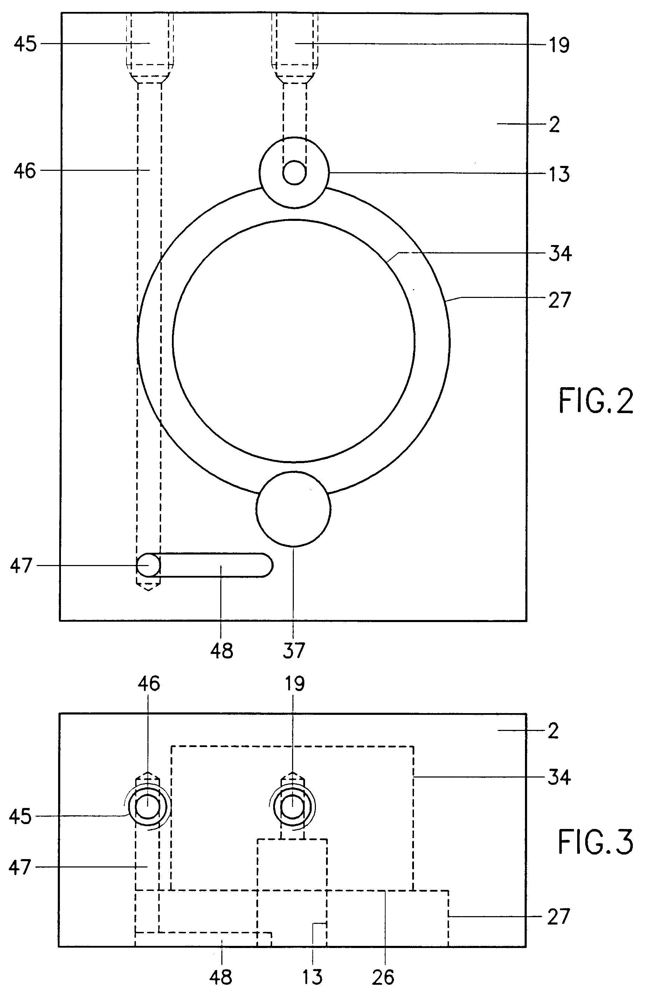

Für die Übertragung des Stossimpulses vom Freikolben 20 auf den Ventilkolben 14 des Entlüftungsventils 12 ist ein Kraftübertragungsorgan in Form einer Mitnehmerscheibe 24 vorgesehen, welche achsparallel zum Freikolben 20 angeordnet und mit einer Nabe 25 auf dessen Verlängerung 22 achsial verschiebbar gelagert ist. Die Achsialbewegung der Mitnehmerscheibe 24 ist begrenzt einerseits durch den Gehäuseblockteil 3 an der Trennebene 4 und andererseits durch den Absatz 26 einer zylindrischen Ausnehmung 27 (Fig. 2) im Gehäuseblockteil 2. Der Freikolben 20 ist mit einem Bund 28 versehen, welcher im Zentrum der Mitnehmerscheibe 24 während des Arbeitshubs des Freikolbens 20 kraftschlüssig an dieser angreift. Die Mitnehmerscheibe 24 greift an der Stelle 29 ihres Umfangsrandes in eine Nut im Fortsatz 17 des Ventilkolbens 14 passend ein und ist auf diese Weise mit dem Ventilkolben 14 formschlüssig verbunden.

Für die Rückführung der Ventileinrichtung 1 in den in Fig. 1 dargestellten Ausgangszustand nach Abschluss eines Giessvorgangs dient eine Federanordnung 30 mit einem aus Tellerfedern gebildeten Federpaket 31, das zwischen einer ruhenden Druckplatte 32 und einer achsial beweglichen Druckplatte 33 innerhalb einer Bohrung 34 des Gehäuseblockteils 2 angeordnet ist. An der beweglichen Druckplatte 33 befindet sich ein Hülsenansatz 35, der die Nabe 25 der Mitnehmerscheibe 24 lose umgibt und das Federpaket 31 innenseitig abschliesst. Zum Spannen des Federpakets 31 sind zwei Stössel 36 und 37 vorhanden, welche den Gehäuseblockteil 3 und die Mitnehmerscheibe 24 achsial frei beweglich durchsetzen und an der beweglichen Druckplatte 33 der Federanordnung 30 anstossen. Die Stössel 36, 37 ragen über die Frontfläche 5 aus dem Gehäuseblockteil 3 hervor und werden beim Zusammenführen der beiden Formteile 6 und 7 der Druckgiessform durch die Stossfläche 9 des Formteils 7 zurückgedrängt, was zum Spannen der Federanordnung 30 führt (Fig. 5).

In der Fig. 1, sowie in den Fig. 5 und 6, sind die genannten Stössel 36, 37 zum besseren Verständnis der Funktionsweise der Ventileinrichtung 1 als in einer gemeinsamen Vertikalebene liegend dargestellt. Tatsächlich sind sie jedoch mit Rücksicht auf die Formgestaltung des Entlüftungskanals 10 in einer gemeinsamen Horizontalebene liegend angeordnet (Fig. 4).

Die Betätigungsvorrichtung umfasst ferner ein Schliessorgan 38, welches mit dem Ventilkolben 14 des Entlüftungsventils 12 in Wirkverbindung steht und diesen in der durch den Kraftimpuls des Freikolbens 20 erreichten Schliessstellung hält. Wie eingangs erwähnt, ist das Schliessorgan 38 nicht in jedem Anwendungsfall notwendig; das Vorhandensein desselben ist aber für einen breiteren Anwendungsbereich der Ventileinrichtung von Nutzen.

Im vorliegenden Beispiel ist das Schliessorgan 38 ein zum Entlüftungsventil 12 achsparallel angeordneter Arbeitszylinder 39 mit pneumatisch oder hydraulisch betätigtem Arbeitskolben 40. Der Arbeitskolben 40 ist mit der Mitnehmerscheibe 24 in gleicher Weise formschlüssig verbunden wie der Ventilkolben 14, und zwar an einer der Stelle 29 gegenüberliegenden Stelle 41 des Scheibenrandes. Auf diese Weise sind also der Arbeitskolben 40 des Schliessorgans 38 und der Ventilkolben 14 des Entlüftungsventils 12 durch die ein starres Verbindungsglied bildende Mitnehmerscheibe 24 formschlüssig miteinander verbunden.

Der Arbeitskolben 40 des Schliessorgans 38 steht unter der Wirkung einer Rückführfeder 42, welche bei gespannter Federanordnung 30 die Mitnehmerscheibe 24 an den Bund 28 des Freikolbens 20 drückt und zugleich den Ventilkolben 14 des Entlüftungsventils 12 in der Offenstellung hält. Die pneumatische oder hydraulische Beaufschlagung des Arbeitskolbens 40 erfolgt grundsätzlich über ein vom Ventilkolben 14 des Entlüftungsventils 12 betätigtes Steuerventil. Aufgrund der starren Verbindung zwischen dem Ventilkolben 14 des Entlüftungsventils 12 und dem Arbeitskolben 40 des Schliessorgans 38 hat es sich als zweckmässig erwiesen, als Steuerventil ein Tellerventil vorzusehen, wobei der Arbeitskolben 40 des Schliessorgans 38 den Ventilteller bildet. In diesem Sinne weist der Arbeitszylinder 39 des Schliessorgans 38 eine stirnseitig in den Zylinderraum ragende Einlassdüse 43 auf, wobei der Arbeitskolben 40 unter der Wirkung der Rückführfeder 42 mit seiner der Düsenöffnung 44 zugewandten Stirnseite diese verschliesst. Die Zufuhr des pneumatischen oder hydraulischen Druckmediums erfolgt gemäss den Fig. 1, 2 und 3 über eine Einlassöffnung 45 (Fig. 2, 3) und die innerhalb des Gehäuseblockteils 2 verlaufenden Kanäle 46, 47 und 48 sowie die innerhalb des Gehäuseblockteils 3 verlaufenden Kanäle 49, 50 und 51 zur Einlassdüse 43.

Der Druck des Druckmediums zum Betrieb des Schliessorgans 38, das Verhältnis des Durchlassquerschnitts der Einlassdüse 43 zum Querschnitt des Arbeitskolbens 40 und die Eigenschaften der auf den Arbeitskolben 40 wirkenden Rückführfeder 42 sind so gewählt, dass bei geschlossenem Steuerventil 40, 43 der in der Einlassdüse 43 herrschende, auf einen Teil des Kolbenquerschnitts wirkende Druck des Druckmediums nicht ausreicht, das Steuerventil 40, 43 zu öffnen, dass aber nach der mechanischen Öffnung des Steuerventils der Arbeitskolben 40 durch den auf dessen gesamte Stirnfläche ausgeübten Druck das Entlüftungsventil 12 zu schliessen und in seiner Schliessstellung zu halten vermag.

Der Entlüftungskanal 10 der Ventileinrichtung 1 besteht aus zahlreichen Zweigkanälen 52 bis 59 und Kammern 60 bis 62, die in ihrer Gesamtanordnung bekanntlich dazu dienen, Spritzer, welche dem kompakten Giessmaterialstrom vorauseilen, aufzufangen, den Staudruck am Freikolben 20 zu erhöhen und den Strom des flüssigen Giessmaterials zum Entlüftungsventil 12 zu verzögern. Von einer am Eingang des Entlüftungskanals 10 angeordneten Auffangkammer 60 führen die beiden Zweigkanäle 52 und 53 zu einer dem Arbeitszylinder 21 des Stossorgans vorgelagerten Erweiterung 63. Von dieser Erweiterung 63 führen die beiden folgenden Zweigkanäle 54 und 55 zu je einer Verzögerungskammer 61 bzw. 62, aus denen die weiteren Zweigkanäle 56, 58 bzw. 57, 59 zu einer dem Ventilzylinder 13 des Entlüftungsventils 12 vorgelagerten Erweiterung 64 führen.

Die Fig. 5 zeigt die Ventileinrichtung 1 im Bereitschaftszustand. Die Druckgiessform ist geschlossen, d.h. der Formteil 7 liegt mit seiner Stossfläche 9 dicht an der Stossfläche 8 des Formteils 6 bzw. an der Frontfläche 5 der Ventileinrichtung 1 an. Durch das Schliessen der Druckgiessform wurde die Federanordnung 30 mit Hilfe der Stössel 36, 37 gespannt. Das Entlüftungsventil 12 befindet sich unter Einwirkung der Rückführfeder 42 des Schliessorgans 38 weiterhin in der Offenstellung, so dass die aus dem Formhohlraum verdrängte Luft in der durch die Pfeile 65, 66 angedeuteten Strömungsrichtung über den Entlüftungskanal 11 der Druckgiessform, den Entlüftungskanal 10 der Ventileinrichtung 1, das geöffnete Entlüftungsventil 12 und den Auslasskanal 16 entweicht. Das Steuerventil 40, 43 des Schliessorgans 38 ist noch geschlossen.

Am Ende eines Giessvorgangs dringt das aus dem Formhohlraum der Druckgiessform über dessen Entlüftungskanal 11 ausströmende flüssige Giessmaterial in den Entlüftungskanal 10 der Ventileinrichtung 1 ein und gelangt über die Zweigkanäle 52, 53 (Fig. 4) zum Freikolben 20 der Betätigungsvorrichtung. Unter der Wucht des anströmenden Giessmaterials wird der kurzhubige Freikolben 20 schlagartig gegen den Endanschlag seiner Verlängerung 22 an der Rückwand 23 des Gehäuseblockteils 2 bewegt. Der Bund 28 am Freikolben 20 überträgt diesen Kraftimpuls auf die Mitnehmerscheibe 24, welche unter der Wirkung der ihr durch den Freikolben 20 vermittelten kinetischen Energie sich vom Bund 28 des Freikolbens 20 abhebt, nach dem dieser seine Endlage erreicht hat, und zusammen mit dem Ventilkolben 14 des Entlüftungsventils 12 und dem Arbeitskolben 40 des Schliessorgans 38 weitergeschleudert wird, entgegen der Kraft der Rückführfeder 42 des Schliessorgans 38. Dabei wird das Entlüftungsventil 12 geschlossen, indem dessen Ventilkolben 14 in den Ventilzylinder 13 eintaucht. Die Schliessbewegung des Entlüftungsventils 12 wird unterstützt durch den Arbeitskolben 40 des Schliessorgans 38, der nach der Öffnung des Steuerventils 40, 43 durch den Stoss des Freikolbens 20 nun unter der vollen Wirkung des Druckmediums steht und dessen in Schliessrichtung wirkende Kraft von der Mitnehmerscheibe 24 auf den Ventilkolben 14 des Entlüftungsventils 12 übertragen wird.

Die Fig. 6 zeigt den Zustand der Ventileinrichtung 1, wie aus dem Formhohlraum in den Entlüftungskanal 10 vordringendes Giessmaterial 67 die Erweiterung 63 vor dem Freikolben 20 erreicht hat und kurz darauf (z.B. nach weniger als 1 msec) auch bis zu der Erweiterung 64 vor dem Ventilkolben 14 des Entlüftungsventils 12 gelangt ist. Zwischenzeitlich hat das Entlüftungsventil 12 ist bereits geschlossen, wobei der Ventilkolben 14 das Ende seines Schliessweges auf die zuvor beschriebene Weise erreicht hat. Damit ist gewährleistet, dass das über die Zweigkanäle 56 bis 59 zur Erweiterung 64 weiterströmende Giessmaterial nicht in das Entlüftungsventil 12 und den Auslasskanal 16 gelangen kann.

Das Ende der Bewegung der Betätigungsvorrichtung ist erreicht, wenn die Mitnehmerscheibe 24 an der beweglichen Druckplatte 33 der gespannten Federanordnung 30 zum Anschlag kommt. Durch den weiterhin unter Druck stehenden Arbeitskolben 40 des Schliessorgans 38 wird der Ventilkolben 14 des Entlüftungsventils 12 mittels der Mitnehmerscheibe 24 in seiner Schliessstellung gehalten. Wie aus der Fig. 6 hervorgeht, kann das flüssige Giessmaterial 67 nur in geringem Masse in den Zylinderraum 21 des Freikolbens 20 und später in den Zylinderraum 13 des Entlüftungsventils 12 eindringen, so dass die spätere Entfernung des erstarrten Giessmaterials aus dem Entlüftungskanal 10 keine Schwierigkeiten bereitet.

Beim Öffnen der Druckgiessform, wobei die beiden Formteile 6 und 7 voneinander entfernt werden, kann sich die Federanordnung 30 entspannen, da die Stössel 36, 37 durch die Entfernung des Formteils 7 von der Stossfläche 9 freigegeben werden. Die Federanordnung 30 drückt nun unter der Wirkung des gespannten Federpakets 31 die Mitnehmerscheibe 24 und damit den Ventilkolben 14 des Entlüftungsventils 12 und den Arbeitskolben 40 des Schliessorgans 38 sowie schliesslich den Freikolben 20 wieder in die Ausgangsstellung gemäss Fig. 1 zurück. Dabei drücken der Kopf 15 des Ventilkolbens 14 und die beaufschlagte Stirnfläche des Freikolbens 20 die in den Erweiterungen 63, 64 gebildeten Zapfen des erstarrten Giessmaterials weg, so dass der ganze Steiger aus seiner Verankerung im Entlüftungskanal 10 gelöst wird. Zudem wird auch das Steuerventil 40, 43 für die Betätigung des Schliessorgans 38 wieder geschlossen.

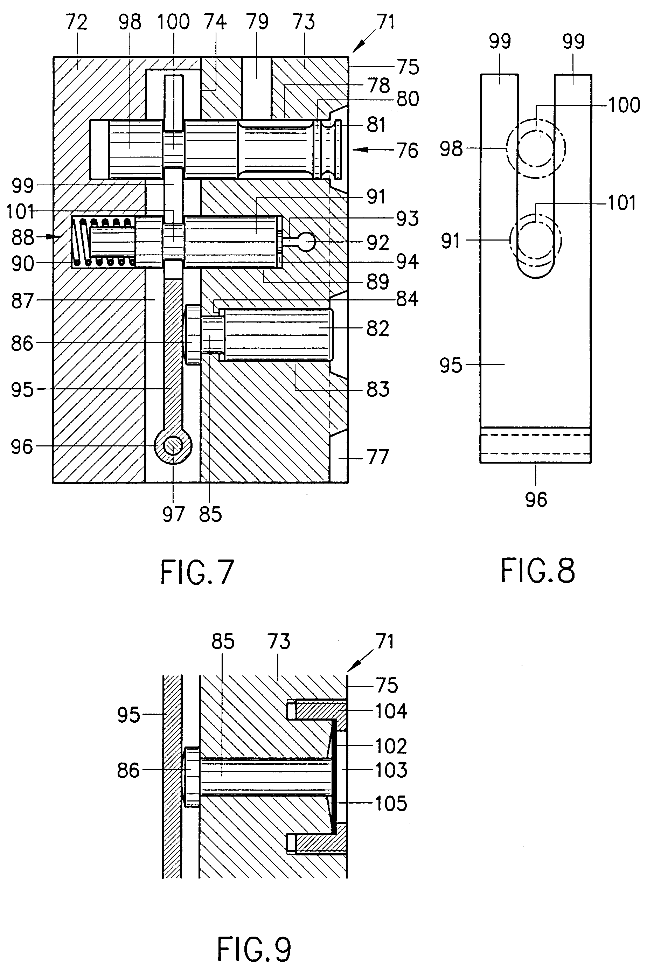

Die Fig. 7 und 8 zeigen den prinzipiellen Aufbau einer anderen Ausführungsform der erfindungsgemässen Ventileinrichtung in kleinerem Massstab. Auch diese Ventileinrichtung 71 ist in einem quaderförmigen Gehäuseblock 72, 73 untergebracht, der längs der Trennebene 74 in einen hinteren Gehäuseblockteil 72 und einen vorderen, eine ebene Frontfläche 75 bildenden Gehäuseblockteil 73 unterteilt ist. In gleicher Weise wie die Ventileinrichtung 1 nach den Fig. 1 bis 6 lässt sich die Ventileinrichtung 71 an einem hier nicht dargestellten Formteil einer mehrteiligen Druckgiessform montieren.

Als Entlüftungsventil 76 ist ebenfalls ein Kolbenventil vorgesehen, das einen an den Entlüftungskanal 77 angeschlossenen Ventilzylinder 78 mit Auslasskanal 79 und einen achsial beweglichen Tauchkolben 80 mit Kolbenkopf 81 aufweist. Als Stossorgan dient wiederum ein vom Giessmaterial beaufschlagbarer Freikolben 82, der in einem Arbeitszylinder 83 achsial beweglich ist und dessen Arbeitshub durch einen Absatz 84 im Arbeitszylinder 83 begrenzt ist. An seinem rückseitigen Ende weist der Freikolben 82 einen Stössel 85 mit einem Stösselkopf 86 auf, welch letzterer in einen Ausschnitt 87 des hinteren Gehäuseblockteils 72 ragt und im Ruhezustand an der Trennebene 74 des vorderen Gehäuseblockteils 73 anliegt. Das Schliessorgan 88 ist in ähnlicher Weise aufgebaut wie das Schliessorgan 38 nach Fig. 1 und weist einen Arbeitszylinder 89 mit einem unter der Wirkung einer Rückführfeder 90 stehenden Arbeitskolben 91 auf. Der Arbeitskolben 91 ist pneumatisch oder hydraulisch beaufschlagbar durch ein Druckmedium, welches über eine Leitung 92 einer in den Arbeitszylinder 89 mündenden Düse 93 zugeführt wird. Ein stirnseitiger Ansatz 94 am Arbeitskolben 91 verschliesst im Ruhezustand desselben die Öffnung der Düse 93 und bildet mit dieser das Steuerventil für die pneumatische bzw. hydraulische Betätigung des Arbeitskolbens 91.

Im Unterschied zur Ausführungsform nach den Fig. 1 bis 6 erfolgt bei diesem Beispiel die Übertragung des Kraftimpulses vom Freikolben 82 auf den Ventilkolben 80 des Entlüftungsventils 76 und den Arbeitskolben 82 des Schliessorgans 88 nicht über ein geradlinig bewegtes Kraftübertragungsorgan (Mitnehmerscheibe 24), sondern über einen Schwenkhebel 95, welcher im Ausschnitt 87 des Gehäuseblockteils 72 angeordnet und mit einem Gelenkkopf 96 an einer Schwenkachse 97 gelagert ist. Der Schwenkhebel 95 ist mit einer rückwärtigen Verlängerung 98 des Ventilkolbens 80 des Entlüftungsventils 76 und mit dem Arbeitskolben 91 des Schliessorgans 88 formschlüssig verbunden, indem zwei Arme 99 des an seinem freien Ende gemäss Fig. 8 gabelförmig ausgebildeten Schwenkhebels 95 seitlich in je eine Umfangsnut 100 bzw. 101 an der Verlängerung 98 und am Arbeitskolben 91 eingreifen. Dieser Eingriff ist mit Rücksicht auf die Schwenkbewegung des Schwenkhebels 95 mit dem dafür notwendigen Spiel behaftet.

Im grossen und ganzen funktioniert die Ventileinrichtung nach den Fig. 7 und 8 in gleicher Weise wie diejenige nach den Fig. 1 bis 6. Bei der Beaufschlagung des Freikolbens 82 durch das in den Entlüftungskanal 77 vordringende Giessmaterial schleudert der kurzhubige Freikolben 82 den Schwenkhebel 95 weg, so dass das Entlüftungsventil 76 geschlossen und durch das Schliessorgan 88 in seiner Schliessstellung gehalten wird.

In der Fig. 9 ist noch eine Variante zu zuletzt beschriebenen Ausführungsform dargestellt. Anstelle des Freikolbens 82 gemäss Fig. 8 ist als Stossorgan eine Membran 102 vorgesehen, welche eine Mündung 103 des Entlüftungskanals an der Frontseite 75 der Ventileinrichtung 71 abschliesst und mit einer Ringmutter 104 am Gehäuseblockteil 73 befestigt ist. Der Stössel 85, welcher ebenfalls einen mit dem Schwenkhebel 95 zusammenwirkenden Stösselkopf 86 aufweist, ist hier bis zur Membran 102 hin verlängert. Am Gehäuseblockteil 73 ist hinter der Membran 102 eine leicht konische Anschlagfläche 105 ausgebildet, welche den Hub der Membran 102 auf ein Mass begrenzt, welches nur einen Bruchteil des vom Ventilkolben 80 (Fig. 7) zurückzulegenden Schliessweges beträgt.

Eine Membrananordnung dieser Art kann selbstverständlich auch bei der Ausführungsform nach den Fig. 1 bis 6 anstelle des Freikolbens 20 vorgesehen sein.

## Patentansprüche

1. Ventileinrichtung (1; 71) zum Entlüften von Druckgiessformen, mit einem Entlüftungskanal (10; 77), einem im Entlüftungskanal angeordneten Entlüftungsventil (12; 76) und einer Betätigungsvorrichtung (20, 24, 38; 82, 88, 95; 102) zum Schliessen des Entlüftungsventils, wobei die Betätigungsvorrichtung einen Kraftaufnehmer (20; 82; 102) aufweist, welcher durch aus dem Formhohlraum in den Entlüftungskanal (10; 77) vordringendes Giessmaterial (67) beaufschlagbar ist und mit dem beweglichen Verschlussteil (14; 80) des Entlüftungsventils (12; 76) in mechanischer Wirkverbindung steht, dadurch gekennzeichnet, dass der Kraftaufnehmer (20; 82; 102) als Stossorgan ausgebildet ist, dessen Arbeitshub auf einen Bruchteil des vom beweglichen Verschlussteil (14; 80) des Entlüftungsventils (12; 76) zurückzulegenden Schliessweges begrenzt ist, dass der Verschlussteil (14; 80) des Entlüftungsventils (12; 76) über den Arbeitshub des Kraftaufnehmers (20; 82; 102) hinaus im Freilauf bewegbar ist, und dass die Betätigungsvorrichtung (20, 24, 38; 82, 88, 95; 102) ein Kraftübertragungsorgan (24; 95) für die Übertragung des Stossimpulses vom Kraftaufnehmer (20; 82; 102) auf den beweglichen Verschlussteil (14; 80) des Entlüftungsventils (12; 76) aufweist.

2. Ventileinrichtung nach Anspruch 1, dadurch gekennzeichnet, dass die Betätigungsvorrichtung (20, 24, 38; 82, 88, 95; 102) ein Schliessorgan (38; 88) aufweist, welches mit dem beweglichen Verschlussteil (14; 80) des Entlüftungsventils (12; 76) in Wirkverbindung steht und dieses in der durch den Kraftimpuls des Stossorgans (20; 82; 102) erreichten Schliessstellung hält.

3. Ventileinrichtung nach Anspruch 1, dadurch gekennzeichnet, dass der Kraftaufnehmer (20; 82) als Freikolben ausgebildet ist, welcher in einem in den Entlüftungskanal (10; 77) mündenden Arbeitszylinder (21; 78) bewegbar ist.

4. Ventileinrichtung nach Anspruch 1, dadurch gekennzeichnet, dass der Kraftaufnehmer (102) als Membran ausgebildet ist, welche eine Mündung (103) des Entlüftungskanals (77) abschliesst.

5. Ventileinrichtung nach einem der vorhergehenden Ansprüche, dadurch gekennzeichnet, dass das Kraftübertragungsorgan (24; 95) mit dem Stossorgan (20; 82; 102) kraftschlüssig und mit dem beweglichen Verschlussteil (14; 80) des Entlüftungsventils (12; 76) formschlüssig verbunden ist.

6. Ventileinrichtung nach einem der vorhergehenden Ansprüche, dadurch gekennzeichnet, dass das Entlüftungsventil als Kolbenventil (12; 76) mit Tauchkolben (14; 80) ausgebildet ist und dass der Kraftaufnehmer (20; 82; 102) achsparallel zum Kolbenventil angeordnet ist.

7. Ventileinrichtung nach den Ansprüchen 5 und 6, dadurch gekennzeichnet, dass das Kraftübertragungsorgan eine achsial bewegliche und koachsial zum Kraftaufnehmer (20) angeordnete Mitnehmerscheibe (24) aufweist, die an ihrer Peripherie mit dem Tauchkolben (14) des Entlüftungsventils (12) formschlüssig verbunden ist und in der Ruhelage der Betätigungsvorrichtung (20, 24, 38) unter Federkraft an einer Stossfläche des Kraftaufnehmers (20) anliegt.

8. Ventileinrichtung nach den Ansprüchen 5 und 6, dadurch gekennzeichnet, dass das Kraftübertragungsorgan einen Schwenkhebel (95) aufweist, der mit dem Tauchkolben (80) des Entlüftungsventils (76) formschlüssig verbunden ist und in der Ruhelage der Betätigungsvorrichtung (82, 88, 95) unter Federkraft an einer Stossfläche des Kraftaufnehmers (82) anliegt.

9. Ventileinrichtung nach Anspruch 2, dadurch gekennzeichnet, dass das Schliessorgan (38; 88) ein Arbeitszylinder (39; 89) mit pneumatisch oder hydraulisch betätigtem Arbeitskolben (40; 91) ist, wobei der Arbeitskolben (40; 91) mit dem beweglichen Verschlussteil (14; 80) des Entlüftungsventils (12; 76) durch ein starres Verbindungsglied (24; 95) formschlüssig verbunden ist.

10. Ventileinrichtung nach den Ansprüchen 7 und 9 oder 8 und 9, dadurch gekennzeichnet, dass der Arbeitszylinder (39; 89) des Schliessorgans (38; 88) achsparallel zum Kraftaufnehmer (20; 82; 102) angeordnet ist und dass das Kraftübertragungsorgan (24; 95) sowohl mit dem beweglichen Verschlussteil (14; 80) des Entlüftungsventils (12; 76) als auch mit dem Arbeitskolben (40; 91) des Schliessorgans (38; 88) formschlüssig verbunden ist.

11. Ventileinrichtung nach Anspruch 10, dadurch gekennzeichnet, dass der bewegliche Verschlussteil (14) des Entlüftungsventils (12) und der Arbeitskolben (40) des Schliessorgans (38) an diametralen Stellen der Mitnehmerscheibe (24) mit dieser verbunden sind.

12. Ventileinrichtung nach Anspruch 9, dadurch gekennzeichnet, dass die pneumatische oder hydraulische Beaufschlagung des Arbeitskolbens (40; 91) des Schliessorgans (38; 88) über ein vom beweglichen Verschlussteil (14; 80) des Entlüftungsventils (12; 76) betätigtes Steuerventil (40, 43; 91, 93) erfolgt.

13. Ventileinrichtung nach Anspruch 12, dadurch gekennzeichnet, dass das Steuerventil (40, 43; 91, 93) ein Tellerventil ist, wobei der Arbeitskolben (40; 91) des Schliessorgans (38; 88) den Ventilteller bildet.

14. Ventileinrichtung nach Anspruch 12, dadurch gekennzeichnet, dass der Arbeitszylinder (39; 89) des Schliessorgans (38; 88) eine stirnseitig in den Zylinderraum ragende Einlassdüse (43; 93) aufweist und dass der Arbeitskolben (40; 91) unter der Wirkung einer Feder (42; 90) mit seiner der Düsenöffnung (40) zugewandten Stirnseite diese verschliesst.

15. Ventileinrichtung nach Anspruch 14, dadurch gekennzeichnet, dass der Druck des Druckmediums zum Betrieb des Schliessorgans (38; 88), das Verhältnis des Durchlassquerschnitts der Einlassdüse (43; 93) zum Querschnitt des Arbeitskolbens (40; 91) und die Eigenschaften der auf den Arbeitskolben wirkenden Feder (42; 90) so gewählt sind, dass bei geschlossenem Steuerventil (40, 43; 91, 93) der in der Einlassdüse herrschende, auf einen Teil des Kolbenquerschnitts wirkende Druck des Druckmediums nicht ausreicht, das Steuerventil zu öffnen, dass aber nach der mechanischen Öffnung des Steuerventils der Arbeitskolben (40; 91) durch den auf dessen gesamte Stirnfläche ausgeübten Druck das Entlüftungsventil (12; 76) zu schliessen und in seiner Schliessstellung zu halten vermag.

16. Ventileinrichtung nach einem der vorhergehenden Ansprüche, dadurch gekennzeichnet, dass der Arbeitshub des Kraftaufnehmers (20; 82; 102) etwa einen Zehntel des vom beweglichen Verschlussorgan (14; 80) zurückzulegenden Schliessweges beträgt.

17. Ventileinrichtung nach einem der vorhergehenden Ansprüche, dadurch gekennzeichnet, dass der Arbeitshub des Kraftaufnehmers (20; 82; 102) höchstens 1 mm beträgt.

18. Ventileinrichtung nach Anspruch 17, dadurch gekennzeichnet, dass der Arbeitshub des Kraftaufnehmers (20; 82; 102) in der Grössenordnung von 0,1 mm liegt.

## Claims

1. Valve mechanism (1; 71) for venting diecasting moulds, having a venting channel (10; 77), a venting valve (12; 76), arranged in the venting channel, and an actuating device (20, 24, 38; 82, 88, 95; 102) for closing the venting valve, the actuating device having a force transducer (20; 82; 102), which can be acted upon by casting material (67) penetrating into the venting channel (10; 77) from the mould cavity and is in mechanical operative connection with the movable closure part (14; 80) of the venting channel (12; 76), characterized in that the force transducer (20; 82; 102) is designed as a pushing element, the working stroke of which is limited to a fraction of the closing travel covered by the movable closure part (14; 80) of the venting valve (12; 76), in that the closure part (14; 80) of the venting valve (12; 76) can be moved in free-running mode beyond the working stroke of the force transducer (20; 82; 102), and in that the actuating device (20, 24, 38; 82, 88, 95; 102) has a force-transmitting element (24; 95) for the transmission of the pushing thrust from the force transducer (20; 82; 102) to the movable closure part (14; 80) of the venting valve (12; 76).

2. Valve mechanism according to Claim 1, characterized in that the actuating device (20, 24, 38; 82, 88, 95; 102) has a closing element (38; 88), which is in operative connection with the movable closure part (14; 80) of the venting valve (12; 76) and keeps the said part in the closed position achieved by the thrust of the pushing element (20; 82; 102).

3. Valve mechanism according to Claim 1, characterized in that the force transducer (20; 82) is designed as a free piston which can be moved in a working cylinder (21; 78) opening into the venting channel (10; 77).

4. Valve mechanism according to Claim 1, characterized in that the force transducer (102) is designed as a diaphragm which closes off a mouth (103) of the venting channel (77).

5. Valve mechanism according to one of the preceding claims, characterized in that the force-transmitting element (24; 95) is non-positively connected to the pushing element (20; 82; 102) and is positively connected to the movable closure part (14; 80) of the venting valve (12; 76).

6. Valve mechanism according to one of the preceding claims, characterized in that the venting valve is designed as a piston-type valve (12; 76) with a plunger (14; 80) and in that the force transducer (20; 82; 102) is arranged axially parallel to the piston-type valve.

7. Valve mechanism according to Claims 5 and 6, characterized in that the force-transmitting element has a driving plate (24) which is axially movable, is arranged coaxially with respect to the force transducer (20), is positively connected at its periphery to the plunger (14) of the venting valve (12) and, in the position of rest of the actuating device (20, 24, 38), bears under spring force against an abutting face of the force transducer (20).

8. Valve mechanism according to Claims 5 and 6, characterized in that the force-transmitting element has a swivelling lever (95), which is positively connected to the plunger (80) of the venting valve (76) and, in the position of rest of the actuating device (82, 88, 95), bears under spring force against an abutting face of the force transducer (82).

9. Valve mechanism according to Claim 2, characterized in that the closing element (38; 88) is a working cylinder (39; 89) with a pneumatically or hydraulically actuated working piston (40; 91), the working piston (40; 91) being positively connected to the movable closure part (14; 80) of the venting valve (12; 76) by a rigid connecting link (24; 95).

10. Valve mechanism according to Claims 7 and 9 or 8 and 9, characterized in that the working cylinder (39; 89) of the closing element (38; 88) is arranged axially parallel to the force transducer (20; 82; 102) and in that the force-transmitting element (24; 95) is positively connected both to the movable closure part (14; 80) of the venting valve (12; 76) and to the working piston (40; 91) of the closing element (38; 88).

11. Valve mechanism according to Claim 10, characterized in that the movable closure part (14) of the venting valve (12) and the working piston (40) of the closing element (38) are connected to the driving plate (24) at diametral points of the latter.

12. Valve mechanism according to Claim 9, characterized in that the pneumatic or hydraulic actuation of the working piston (40; 91) of the closing element (38; 88) takes place via a control valve (40, 43; 91, 93) actuated by the movable closure part (14; 80) of the venting valve (12; 76).

13. Valve mechanism according to Claim 12, characterized in that the control valve (40, 43; 91, 93) is a disc valve, the working piston (40; 91) of the closing element (38; 88) forming the valve disc.

14. Valve mechanism according to Claim 12, characterized in that the working cylinder (39; 89) of the closing element (38; 88) has an inlet nozzle (43; 93), protruding at its end into the cylinder space, and in that the working piston (40; 91) closes the nozzle opening (40) by its end facing the latter under the action of a spring (42; 90).

15. Valve mechanism according to Claim 14, characterized in that the pressure of the pressure medium for operating the closing element (38; 88), the ratio of the flow cross-section of the inlet nozzle (43; 93) to the cross-section of the working piston (40; 91) and the properties of the spring (42; 90) acting on the working piston are chosen such that, with the control valve (40, 43; 91, 93) closed, the pressure of the pressure medium prevailing in the inlet nozzle and acting on part of the piston cross-section is not sufficient to open the control valve, but that, after the mechanical opening of the control valve, the working piston (40; 91) is able to close the venting valve (12; 76) and keep it in its closed position by the pressure exerted on its entire end face.

16. Valve mechanism according to one of the preceding claims, characterized in that the working stroke of the force transducer (20; 82; 102) is about one tenth of the closing travel covered by the movable closure element (14; 80).

17. Valve mechanism according to one of the preceding claims, characterized in that the working stroke of the force transducer (20; 82; 102) is at most 1 mm.

18. Valve mechanism according to Claim 17, characterized in that the working stroke of the force transducer (20; 82; 102) is of the order of magnitude of 0.1 mm.

## Revendications

1. Dispositif de valve (1 ; 71) pour la mise à l'air d'un moule de coulée sous pression, comprenant un conduit d'évent (10 ; 77), une valve d'évent (12 ; 76) disposée dans le conduit d'évent et un dispositif d'actionnement (20, 24, 38 ; 82, 88, 95 ; 102) servant à fermer la valve d'évent, le dispositif d'actionnement comprenant un transducteur de force (20 ; 82 ; 102) qui peut être soumis à l'action d'une matière de coulée (67) avançant de la cavité du moule jusque dans le conduit d'évent (10 ; 77) et qui coopère mécaniquement avec l'obturateur mobile (14 ; 80) de la valve d'évent (12 ; 76), caractérisé en ce que le transducteur de force (20 ; 82 ; 102) est réalisé sous forme d'un organe de poussée dont la course de travail est limitée à une fraction de la course de fermeture devant être parcourue par l'obturateur mobile (14 ; 80) de la valve d'évent (12 ; 76), en ce que l'obturateur (14 ; 80) de la valve d'évent (12 ; 76) peut se déplacer suivant un mouvement de course libre au-delà de la course de travail du transducteur de force (20 ; 82 ; 102) et en ce que le dispositif d'actionnement (20, 24, 38 ; 82, 88, 95 ; 102) comprend un organe de transmission de force (24 ; 95) servant à transmettre l'impulsion de poussée du transducteur de force (20 ; 82 ; 102) à l'obturateur mobile (14 ; 80) de la valve d'évent (12 ; 76).

2. Dispositif de valve suivant la revendication 1, caractérisé en ce que le dispositif d'actionnement (20, 24, 38 ; 82, 88, 95 ; 102) comprend un organe de fermeture (38 ; 88) qui coopère avec l'obturateur mobile (14 ; 80) de la valve d'évent (12 ; 76) et maintient cet obturateur dans la position de fermeture atteinte au moyen de l'impulsion de force de l'organe de poussée (20 ; 82 ; 102).

3. Dispositif de valve suivant la revendication 1, caractérisé en ce que le transducteur de force (20 ; 82) est réalisé sous forme d'un piston libre qui peut se déplacer dans un cylindre de travail (21 ; 78) débouchant dans le conduit d'évent (10 ; 77).

4. Dispositif de valve suivant la revendication 1, caractérisé en ce que le transducteur de force (102) est réalisé sous forme d'une membrane qui obture un débouché (103) du conduit d'évent (77).

5. Dispositif de valve suivant l'une des revendications précédentes, caractérisé en ce que l'organe de transmission de force (24 ; 95) est relié par solidarisation par application de force à l'organe de poussée (20 ; 82 ; 102) et par complémentarité de formes à l'obturateur mobile (14 ; 80) de la valve d'évent (12 ; 76).

6. Dispositif de valve suivant l'une des revendications précédentes, caractérisé en ce que la valve d'évent est réalisée sous forme d'une valve à piston (12 ; 76) à piston plongeur (14 ; 80) et en ce que le transducteur de force (20; 82; 102) est disposé avec son axe parallèle à la valve de piston.

7. Dispositif de valve suivant les revendications 5 et 6, caractérisé en ce que l'organe de transmission de force comprend un plateau d'entraînement (24) qui est coaxial au transducteur de force (20) et mobile axialement et qui est relié à sa périphérie par complémentarité de formes au piston plongeur (14) de la valve d'évent (12) et, dans la position de repos du dispositif d'actionnement (20, 24, 38), prend appui sous l'application de la force d'un ressort sur une surface de poussée du transducteur de force (20).

8. Dispositif de valve suivant les revendications 5 et 6, caractérisé en ce que l'organe de transmission de force comprend un levier basculant (95) qui est relié par complémentarité de formes au piston plongeur (80) de la valve d'évent (76) et qui, dans la position de repos du dispositif d'actionnement (82, 88, 95), prend appui sous l'application de la force d'un ressort sur une surface de poussée du transducteur de force (82).

9. Dispositif de valve suivant la revendication 2, caractérisé en ce que l'organe de fermeture (38 ; 88) est un cylindre de travail (39 ; 89) comportant un piston de travail (40 ; 91) actionné pneumatiquement ou hydrauliquement, le piston de travail (40 ; 91) étant relié par complémentarité de formes à l'obturateur mobile (14 ; 80) de la valve d'évent (12 ; 76) par un organe de liaison rigide (24 ; 95).

10. Dispositif de valve suivant les revendications 7 et 9 ou 8 et 9, caractérisé en ce que le cylindre de travail (39 ; 89) de l'organe de fermeture (38 ; 88) est disposé avec son axe parallèle à celui du transducteur de force (20 ; 82 ; 102) et en ce que l'organe de transmission de force (24 ; 95) est relié par complémentarité de formes à la fois à l'obturateur mobile (14 ; 80) de la valve d'évent (12 ; 76) et avec le piston de travail (40 ; 91) de l'organe de fermeture (38 ; 88).

11. Dispositif de valve suivant la revendication 10, caractérisé en ce que l'obturateur mobile (14) de la valve d'évent (12) et le piston de travail (40) de l'organe de fermeture (38) sont reliés au plateau d'entraînement (24) en des emplacements diamétralement opposés de celui-ci.

12. Dispositif de valve suivant la revendication 9, caractérise en ce que la sollicitation pneumatique ou hydraulique du piston de travail (40 ; 91) de l'organe de fermeture (38 ; 88) a lieu par l'intermédiaire d'une valve de commande (40, 43 ; 91, 93) actionnée par l'obturateur mobile (14 ; 80) de la valve d'évent (12 ; 76).

13. Dispositif de valve suivant la revendication 12, caractérisé en ce que la valve de commande (40, 43 ; 91, 93) est une valve à plateau, le piston de travail (40 ; 91) de l'organe de fermeture (38 ; 88) constituant le plateau de valve.

14. Dispositif de valve suivant la revendication 12, caractérisé en ce que le cylindre de travail (39 ; 89) de l'organe de fermeture (38 ; 88) comporte une buse d'entrée (43 ; 93) faisant saillie frontalement dans la cavité de cylindre et en ce que, sous l'action d'un ressort (42 ; 90), le piston de travail (40 ; 91) ferme l'orifice de buse (40) par sa face frontale tournée vers cet orifice.

15. Dispositif de valve suivant la revendication 14, caractérisé en ce que la pression de l'agent de pression servant au fonctionnement de l'organe de fermeture (38 ; 88), le rapport de la section transversale de passage de la buse d'entrée (43 ; 93) à la section transversale du piston de travail (40 ; 91) et les propriétés du ressort (42 ; 90) agissant sur le piston de travail sont choisie de façon que, lorsque la valve de commande (40, 43 ; 91, 93) est fermée, la pression de l'agent de pression régnant dans la buse d'entrée et agissant sur une partie de la section transversale de piston ne suffit pas à ouvrir la valve de commande, mais qu'après l'ouverture mécanique de la valve de commande, le piston de travail (40 ; 91) peut, au moyen de la pression exercée sur toute sa surface frontale, fermer la valve d'évent (12 ; 76) et la maintenir dans sa position de fermeture.

16. Dispositif de valve suivant l'une des revendications précédentes, caractérisé en ce que la course de travail du transducteur de force (20 ; 82 ; 102) vaut à peu près un dixième de la course de fermeture devant être parcourue par l'organe de fermeture (14 ; 80) mobile.

17. Dispositif de valve suivant l'une des revendications précédentes, caractérisé en ce que la course de travail du transducteur de force (20 ; 82 ; 102) vaut au maximum 1 mm.

18. Dispositif de valve suivant la revendication 17, caractérisé en ce que la course de travail du transducteur de force (20 ; 82 ; 102) est de l'ordre de 0,1 mm.
